(19) Europäisches Patentamt
European Patent Office
Office européen des brevets

(11) **EP 4 105 784 A1**

(12) **EUROPEAN PATENT APPLICATION**
published in accordance with Art. 153(4) EPC

(43) Date of publication:
**21.12.2022 Bulletin 2022/51**

(21) Application number: **20922723.0**

(22) Date of filing: **03.03.2020**

(51) International Patent Classification (IPC):
**G06F 13/38** (2006.01)     **H04L 12/40** (2006.01)

(52) Cooperative Patent Classification (CPC):
**G06F 13/38; H04L 12/40; H04L 43/00**

(86) International application number:
**PCT/CN2020/077651**

(87) International publication number:
**WO 2021/174424 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang District
Shenzhen, Guangdong 518129 (CN)**

(72) Inventors:
• **WANG, Mingyue
  Shenzhen, Guangdong 518129 (CN)**
• **XU, Jing
  Shenzhen, Guangdong 518129 (CN)**
• **WANG, Yunpeng
  Shenzhen, Guangdong 518129 (CN)**
• **HUANG, Shaofeng
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **CAN BUS CIRCUIT AND CAN BUS COMMUNICATION METHOD**

(57) This application provides a CAN bus circuit and a CAN bus communications method. The CAN bus circuit used for CAN bus communication includes: at least one CAN unit and one bus, where a first CAN unit includes an input port and an output port, the first CAN unit is any one of the at least one CAN unit, the output port is connected to the bus by using a first circuit, the input port is connected to the bus by using a second circuit, a first diode is disposed on the first circuit, and a second diode is disposed on the second circuit. In this application, a forward voltage drop requirement for a diode can be reduced, to implement engineering application.

FIG. 6

# Description

## TECHNICAL FIELD

This application relates to communications technologies, and in particular, to a CAN bus circuit and a CAN bus communications method.

## BACKGROUND

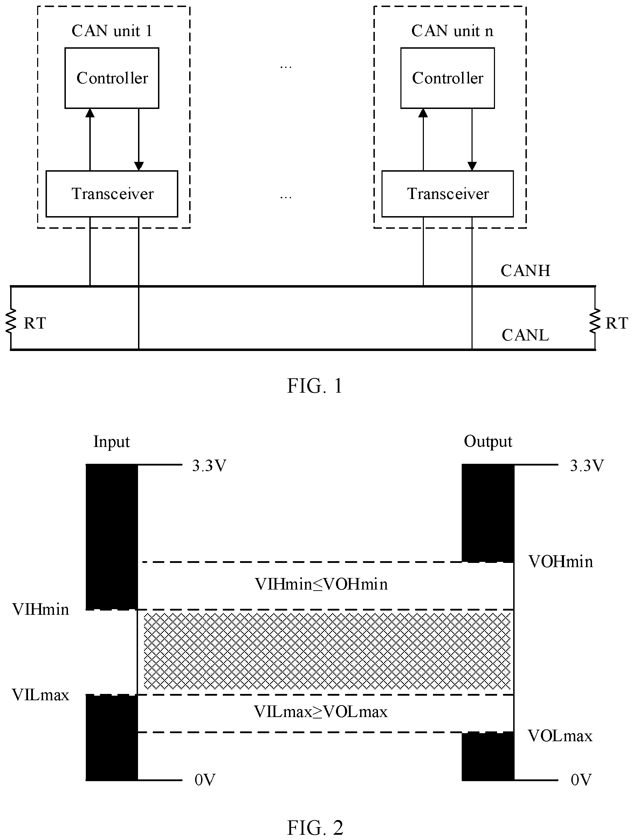

A controller area network (controller area network, CAN) bus is a serial communication bus, and is initially used to implement reliable communication between electronic devices in an automobile. Later, because of features such as simplicity, practicality, and reliability, the CAN bus is widely applied to field control fields such as industrial automation and ship control. Therefore, the CAN bus is also referred to as a field bus. The CAN bus can implement multi-master control. That is, when the bus is idle, all CAN units can send messages to and receive messages from the CAN bus. The CAN bus can also perform error self-check. To improve reliability, each CAN unit can compare a transmitted level with a monitored level of the CAN bus. If the two levels are inconsistent, an error is reported. FIG. 1 is a schematic diagram of an example of a structure of a CAN bus. As shown in FIG. 1, the CAN bus includes a plurality of (1 to n) CAN units and two buses (CANH and CANL), and one CAN unit includes a controller and a transceiver. The controller is responsible for processing data into a data frame format complying with the CAN protocol, and the transceiver connects the controller to the CAN bus.

In a related technology, if no long-distance signal transmission needs to be performed and signal interference is relatively low, no transceiver is disposed in the CAN unit to save costs and simplify this solution. Instead, a circuit is constructed (for example, the CAN unit and the bus are directly connected by using a transmit (TX) branch and a receive (RX) branch, and a diode is disposed on the TX branch) to meet the CAN protocol, to implement CAN bus communication without a CAN transceiver.

However, in the foregoing structure, limited by high and low logic levels of the CAN controller, a required diode is difficult to come by, which increases difficulty in implementing the foregoing technology.

## SUMMARY

This application provides a CAN bus circuit and a CAN bus communication method, to reduce a forward voltage drop requirement for a diode, thereby implementing engineering application.

According to a first aspect, this application provides a CAN bus circuit, including: at least one CAN unit and one bus, where a first CAN unit includes an input port and an output port, the first CAN unit is any one of the at least one CAN unit, the output port is connected to the bus by using a first circuit, the input port is connected to the bus by using a second circuit, a first diode is disposed on the first circuit, and a second diode is disposed on the second circuit.

In this embodiment, diodes are separately disposed on a circuit of TX and a circuit of RX, so that a forward voltage drop requirement for the diode can be reduced, to implement engineering application.

In a possible implementation, the circuit further includes: a first resistor, where one end of the first resistor is connected to a power supply, and the other end of the first resistor is connected to the bus.

The first resistor has a current limiting function, to protect another component on the bus.

In a possible implementation, the circuit further includes: a second resistor, where one end of the second resistor is grounded, the other end of the second resistor is connected to the second circuit, and a connection point between the second resistor and the second circuit is located between the input port and the second diode.

In this embodiment, diodes are separately disposed on a circuit of an output port and a circuit of an input port, and a grounded resistor is connected to a circuit of the input port. The resistor has a weak pull-down function, so that a forward voltage drop requirement for the diode can be reduced, to implement engineering application without involving a safety margin, avoiding uncertainty in engineering.

In a possible implementation, an input voltage on the bus is 5V, 3.3V, or 1.8V It should be noted that, with development of CAN bus technologies, another input voltage may be introduced, and the another input voltage is also applicable to the CAN bus circuit provided in this application. The three voltages in this application constitute no limitation thereto.

In a possible implementation, when the output port outputs a high level, the first diode is not turned on and the second diode is turned on, and if V2≤Vcc-VIHmin-Vr-ΔVd, the input port inputs a high level, V2 is the forward voltage drop of the second diode, Vcc is an input voltage on the bus, VIHmin is a high level threshold of the input port, Vr is a voltage drop of the first resistor, and ΔVd is a safety margin used to ensure that the second diode is turned on when the bus has a low level; or when the output port outputs a low level, both the first diode and the second diode are turned on, V1-V2<VILmax-Vo+ΔVd, the input port inputs a low level, V1 is a forward voltage drop of the first diode, VILmax is a low level threshold of the input port, and Vo is a voltage that is output through the output port.

In a possible implementation, when the output port outputs a high level, the first diode is not turned on and the second diode is turned on, and if V2≤Vcc-VIHmin, the input port inputs a high level, V2 is a forward voltage drop of the second diode, Vcc is an input voltage on the bus, and VIHmin is a high level threshold of the input port; when the output port outputs a low level, the first diode is turned on, and if the second diode is not turned on, the input port inputs a low level; or when the output port outputs a low level, the first diode is turned on, and if the second diode is turned on, V1-V2≤VILmax-Vo, the input port inputs a low level, V1 is a forward voltage drop of the first diode, VILmax is a low level threshold of the input port, and Vo is a voltage that is output through the output port.

In a possible implementation, when Vo≤VOLmax, the output port outputs a low level, VOLmax is a low level threshold of the output port, and Vo is the voltage that is output through the output port; when Vo≥VOHmin, the output port outputs a high level, and VOHmin is a high level threshold of the output port; when Vi≤VILmax, the input port inputs a low level, VILmax is the low level threshold of the input port, and Vi is a voltage that is input through the input port; or when Vi≥VIHmin, the input port inputs a high level, and VIHmin is the high level threshold of the input port.

According to a second aspect, this application provides a CAN bus communications method. The method is applied to the CAN bus circuit according to any one of the first aspect, and the method includes: outputting a first signal to a bus through an output port; receiving a second signal from the bus through an input port; and determining a state of the bus based on the first signal and the second signal

This embodiment implements self-test of the CAN bus provided in the first aspect, and is easy to implement.

In a possible implementation, when the first signal has a high level, if the second signal has a high level, the bus is normal; or if the second signal has a low level, the bus is abnormal.

In a possible implementation, when the first signal has a low level, if the second signal has a high level, the bus is abnormal; or if the second signal has a low level, the bus is normal

In a possible implementation, when the first signal has a high level, a first diode is not turned on and a second diode is turned on, and if V2≤Vcc-VIHmin-Vr-ΔVd, the input port inputs a high level, V2 is a forward voltage drop of the second diode, Vcc is an input voltage on the bus, VIHmin is a high level threshold of the input port, Vr is a voltage drop of a first resistor, and ΔVd is a safety margin used to ensure that the second diode is turned on when the bus has a low level; or when the first signal has a low level, both the first diode and the second diode are turned on, V1-V2≤VILmax-Vo+ΔVd, the input port inputs a low level, V1 is a forward voltage drop of the first diode, VILmax is a low level threshold of the input port, and Vo is a voltage that is output through the output port.

In a possible implementation, when the first signal has a high level, the first diode is not turned on and the second diode is turned on, and if V2≤Vcc-VIHmin, the second signal has a high level, V2 is the forward voltage drop of the second diode, Vcc is the input voltage on the bus, and VIHmin is the high level threshold of the input port; when the first signal has a low level, the first diode is turned on, and if the second diode is not turned on, the second signal has a low level; or when the first signal has a low level, the first diode is turned on, and if the second diode is turned on, V1-V2≤VILmax-Vo, the second signal has a low level, V1 is the forward voltage drop of the first diode, VILmax is the low level threshold of the input port, and Vo is the voltage that is output through the output port.

In a possible implementation, when Vo≤VOLmax, the output port outputs a low level, VOLmax is a low level threshold of the output port, and Vo is the voltage that is output through the output port; when Vo≥VOHmin, the output port outputs a high level, and VOHmin is a high level threshold of the output port; when Vi≤VILmax, the input port inputs a low level, VILmax is the low level threshold of the input port, and Vi is a voltage that is input through the input port; or when Vi≥VIHmin, the input port inputs a high level, and VIHmin is the high level threshold of the input port.

According to a third aspect, this application provides a CAN bus communications apparatus. The apparatus includes: a sending module, configured to output a first signal to a bus through an output port; a receiving module, configured to receive a second signal from the bus through an input port; and a processing module, configured to determine a state of the bus based on the first signal and the second signal.

In a possible implementation, when the first signal has a high level, the processing module is specifically configured to: if the second signal has a high level, determine that the bus is normal; or if the second signal has a low level, determine that the bus is abnormal.

In a possible implementation, when the first signal has a low level, the processing module is specifically configured to: if the second signal has a high level, determine that the bus is abnormal; or if the second signal has a low level, determine that the bus is normal.

In a possible implementation, when the first signal has a high level, a first diode is not turned on and a second diode is turned on, and if V2≤Vcc-VIHmin-Vr-ΔVd, the input port inputs a high level, V2 is a forward voltage drop of the second diode, Vcc is an input voltage on the bus, VIHmin is a high level threshold of the input port, Vr is a voltage drop of a first resistor, and ΔVd is a safety margin used to ensure that the second diode is turned on when the bus has a low level; or when the first signal has a low level, both the first diode and the second diode are turned on, V1-V2≤VILmax-Vo+ΔVd, the input port inputs a low level, V1 is a forward voltage drop of the first diode, VILmax is a low level threshold of the input port, and Vo is a voltage that is output through the output port.

In a possible implementation, when the first signal has a high level, the first diode is not turned on and the second diode is turned on, and if V2≤Vcc-VIHmin, the second signal has a high level, V2 is the forward voltage drop of the second diode, Vcc is the input voltage on the bus, and VIHmin is the high level threshold of the input port; when the first signal has a low level, the first diode is turned on, and if the second diode is not turned on, the second signal has a low level; or when the first signal has a low level, the first diode is turned on, and if the second diode is turned on, $V1-V2 \leq VILmax-Vo$, the second signal has a low level, V1 is the forward voltage drop of the first diode, VILmax is the low level threshold of the input port, and Vo is the voltage that is output through the output port.

In a possible implementation, when $Vo \leq VOLmax$, the output port outputs a low level, VOLmax is a low level threshold of the output port, and Vo is the voltage that is output through the output port; when $Vo \geq VOHmin$, the output port outputs a high level, and VOHmin is a high level threshold of the output port; when $Vi \leq VILmax$, the input port inputs a low level, VILmax is the low level threshold of the input port, and Vi is a voltage that is input through the input port; or when $Vi \geq VIHmin$, the input port inputs a high level, and VIHmin is the high level threshold of the input port.

According to a fourth aspect, this application provides a device, where components in the device communicate with each other by using the CAN bus circuit according to any one of the first aspect.

**BRIEF DESCRIPTION OF DRAWINGS**

FIG. 1 is a schematic diagram of an example of a structure of a CAN bus circuit;
FIG. 2 is a schematic diagram of an example of level matching of a signal of a controller;
FIG. 3 is a schematic diagram of another example of a structure of a CAN bus circuit;
FIG. 4 is a block diagram of an example of a structure of a network device 400 according to this application;
FIG. 5 is a schematic diagram of an example of a structure of a terminal device 500;
FIG. 6 is a schematic diagram of Embodiment 1 of a structure of a CAN bus circuit according to this application;
FIG. 7 is a schematic diagram of Embodiment 2 of a structure of a CAN bus circuit according to this application;
FIG. 8 is a flowchart of an embodiment of a CAN bus communications method according to this application; and
FIG. 9 is a schematic diagram of a structure of an embodiment of a CAN bus communications apparatus according to this application.

**DESCRIPTION OF EMBODIMENTS**

To make the objectives, technical solutions, and advantages of this application clearer, the following clearly and completely describes the technical solutions in this application with reference to accompanying drawings in this application. Obviously, described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one (item)" refers to one or more and "a plurality of' refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Terms used in this application are described as follows:

Voltage: A voltage (voltage), also referred to as potential difference, is a physical quantity used to measure an energy difference caused by different electric potentials of a unit charge in an electrostatic field. A direction of the voltage is specified as a direction from a high potential to a low potential. The direction of the voltage usually means a voltage drop across a load on a circuit.

Level: A level is also referred to as a logic level, is a state in which a signal can be generated, and is usually represented by a potential difference between a signal and a ground cable. The level includes a high level and a low level. Generally, when an input voltage or an output voltage is higher than a set minimum threshold, it may be considered that a high level is input or a high level is output, or when an input voltage or an output voltage is lower than a set maximum threshold, it may be considered that a low level is input or a low level is output.

Voltage drop: A change of an electric potential relative to a same reference point after a current flows through a load is referred to as an electric voltage drop, voltage drop for short. To put it simply, a potential difference between two ends of the load can be considered as the voltage drop.

Current-limiting resistor: A resistor is connected in series on a circuit to limit a current of the circuit, which prevents components connected in series from being burnt due to excessive current. The current-limiting resistor can also be used to perform voltage division. Voltage division means that when a total voltage remains unchanged and a resistor is connected in series on a circuit, a part of the voltage is reduced on the resistor. As a result, a voltage across this part of circuit is reduced.

FIG. 1 is a schematic diagram of an example of a structure of a CAN bus circuit. As shown in FIG. 1, the CAN bus circuit includes a plurality of (1 to n) CAN units and two buses (CANH and CANL), and one CAN unit includes a controller and a transceiver. The controller is responsible for processing data into a data frame format complying with the CAN protocol, and the transceiver connects the controller to the CAN bus. A definition of a signal level varies based on a physical layer of the CAN bus. For example, for a high-speed CAN bus, logic "1" defined that a voltage of CANH is the same as a voltage of CANL (VCANH=VCANL=2.5V), and logic "0" defined that the voltage of the CANH is 2V different from the voltage of the CANL (VCANH-VCANL=2V). A signal of the controller is a standard digital logic level, and common voltages include 1.8V, 3.3V, 5V, and the like. FIG. 2 is a schematic diagram of an example of level matching of a signal of a controller. As shown in FIG. 2, a 3.3V LVCMOS signal is used as an example. When the signal serves as an input signal, a level of the signal is considered as a low level if the level of the signal falls within a range [0, VILmax]; or the level of the signal is considered as a high level if the level of the signal falls within a range [VIHmin, 3.3). When the signal serves as an output signal, the level of the signal is considered as a low level if the level of the signal falls within a range [0, VOLmax]; or the level of the signal is considered as a high level if the level of the signal falls within a range [VOHmin, 3.3). A low level threshold VILmax of an input signal, a high level threshold VIHmin of the input signal, a low level threshold VOLmax of an output signal, and a high level threshold VOHmin of the output signal meet the following conditions:

$$VILmax \geq VOLmax;$$

and

$$VIHmin \leq VOHmin.$$

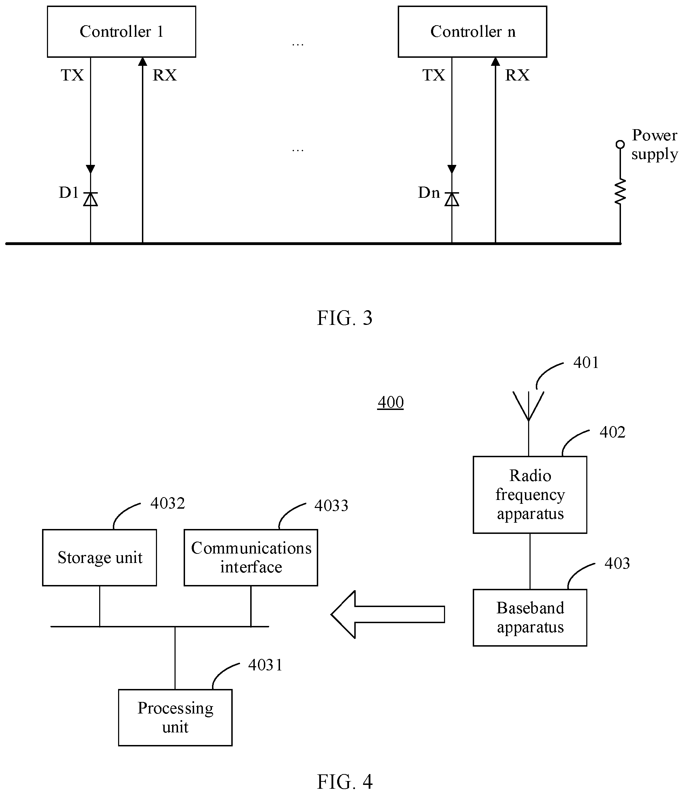

In a related technology, if no long-distance signal transmission needs to be performed and signal interference is relatively low, the transceiver in the CAN unit may be omitted to save costs and simplify this solution. Instead, a circuit is constructed to meet the CAN protocol, to implement CAN bus communication without a transceiver. FIG. 3 is a schematic diagram of another example of a structure of a CAN bus. As shown in FIG. 3, the CAN bus includes only one bus. One end of the bus is connected to a power supply, and a resistor R is disposed near the power supply. The CAN bus includes at least one CAN unit, and each CAN unit has a same structure. One of the CAN units is used as an example. The CAN unit includes a controller 1. The controller 1 includes an output port (TX) and an input port (RX). The input port is directly connected to the bus. A diode D1 is disposed on a circuit between the output port and the bus.

The following uses a CAN unit 1 as an example to describe a principle of CAN bus communication.

When a signal sent by the controller 1 has a high level, TX outputs a high level. Because both ends of the diode D1 have high levels (the bus is loaded with the power supply, and therefore the bus has a high level), the diode D1 is not turned on. The bus still has a high level, and RX is directly connected to the bus. Therefore, a signal that is input through RX has a high level.

When a signal sent by the controller 1 has a low level, TX outputs a low level, but the bus has a high level. Therefore, the diode D1 is turned on. The level of the bus is pulled down. In this case, a signal that is input through RX has a low level. Therefore, for the controller, the level of the signal that is output through TX is consistent with the level of the signal that is input through RX, meeting a communications requirement of the CAN bus.

A key for the CAN bus to meet a self-check requirement lies in a diode between TX of each CAN unit and the bus. When a signal that is output through TX has a low level, the diode is turned on, and the level of the bus is pulled down. Theoretically, in this case, a signal read by an RX end has a low level. However, as shown in FIG. 2, a digital circuit has a high/low level threshold, the logic is not absolute "0" or "1", and the diode has a forward voltage drop Vf. It is assumed that the level of the signal that is output through TX is VOLmax, and the diode is turned on. Because of the forward voltage drop Vf of the diode, a voltage on the bus Vbus=VOLmax+Vf. The level of the signal that is input through RX is Vbus. To make the signal that is input through RX has a low level, the level of the signal that is input through RX needs to meet VILmax≥Vbus=VOLmax+Vf, that is, Vf≤VILmax-VOLmax. For some controllers, VOLmax=0.7V, VILmax=0.8V, and Vf≤0.1V may be obtained by substituting VILmax and VOLmax into the foregoing formula. However, generally, a lowest voltage drop of a diode is 0.4 V within a temperature range from - 40°C to +125°C, a forward voltage drop of the diode may reach 0.4V with temperature fluctuation. Therefore, a diode that meets the requirement is difficult to come by.

This application provides a CAN bus circuit. The CAN bus circuit may be applied to various apparatuses that have an internal communication requirement. The apparatus may be a network device, or may be a terminal device. This is not limited in this application.

FIG. 4 is a block diagram of an example of a structure of a network device 400 according to this application. As shown in FIG. 4, the network device 400 includes components such as an antenna 401, a radio frequency apparatus 402, and a baseband apparatus 403. These components can communicate with each other through one or more communication buses or signal cables. The communication bus or the signal cable may be a CAN bus provided in this application. A person skilled in the art may understand that, the network device 400 may include more or fewer components than those shown in the diagram, or some components may be combined, or the components may be disposed in a different manner.

The antenna 401 is connected to the radio frequency apparatus 402. In an uplink direction, the radio frequency apparatus 402 receives a signal from a terminal device through the antenna 401, and sends the received signal to the baseband apparatus 403 for processing. In a downlink direction, the baseband apparatus 403 generates a signal that needs to be sent to the terminal device, and sends the generated signal to the radio frequency apparatus 402. The radio frequency apparatus 402 transmits the signal through the antenna 401.

The baseband apparatus 403 may include one or more processing units 4031. The processing unit 4031 may be specifically a processor.

In addition, the baseband apparatus 403 may further include one or more storage units 4032 and one or more communications interfaces 4033. The storage unit 4032 is configured to store a computer program and/or data. The communications interface 4033 is configured to exchange information with the radio frequency apparatus 402. The storage unit 4032 may be specifically a memory. The communications interface 4033 may be an input/output interface or a transceiver circuit.

Optionally, the storage unit 4032 may be a storage unit located on a same chip as the processing unit 4031, namely, an on-chip storage unit, or may be a storage unit located on a different chip from the processing unit 4031, namely, an off-chip storage unit. This is not limited in this application.

The terminal device may also be referred to as user equipment (user equipment, UE), and may be deployed on land, including an indoor or outdoor scenario and a handheld or in-vehicle scenario, or may be deployed on water (for example, on a ship), or may be deployed in the air (for example, on an airplane, a balloon, or a satellite). The terminal device may be a mobile phone (mobile phone), a tablet computer (pad), a wearable device having a wireless communication function (such as a smartwatch), a location tracker with a locating function, a computer with a wireless transceiver function, a virtual reality (virtual reality, VR) device, an augmented reality (augmented reality, AR) device, a wireless device in industrial control (industrial control), a wireless device in self driving (self driving), a wireless device in remote medical (remote medical) care, a wireless device in a smart grid (smart grid), a wireless device in transportation safety (transportation safety), a wireless device in a smart city (smart city), a wireless device in a smart home (smart home), a device in a vehicle such as an automobile or a train, or the like. This is not limited in embodiments of this application.

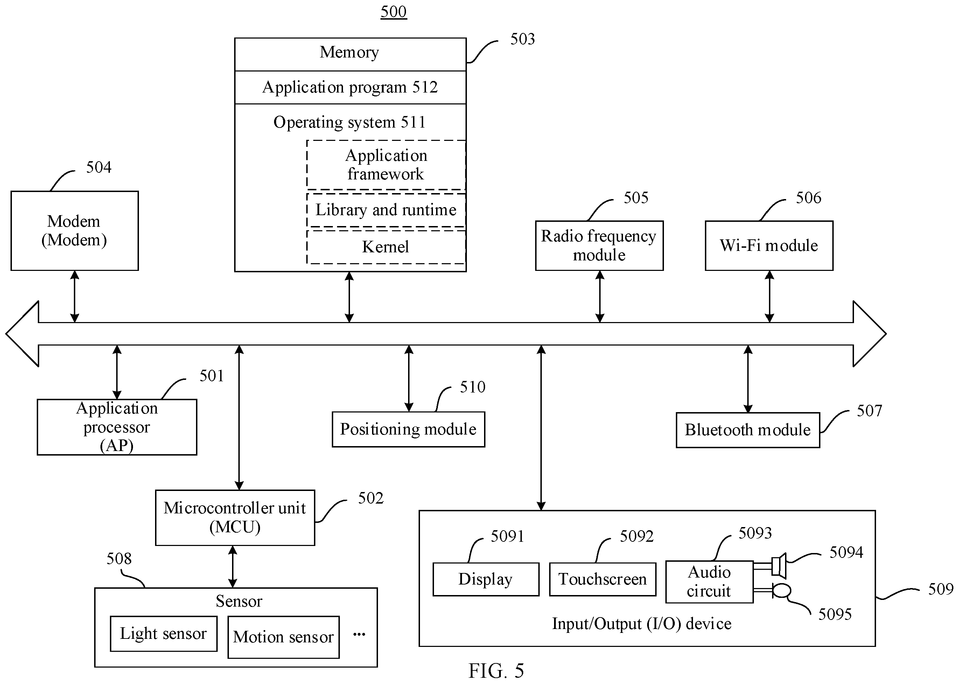

FIG. 5 is a schematic diagram of an example of a structure of a terminal device 500. As shown in FIG. 5, the terminal device 500 includes components such as an application processor 501, a microcontroller unit (microcontroller unit, MCU) 502, a memory 503, a modem (modem) 504, a radio frequency (radio frequency, RF) module 505, a wireless fidelity (Wireless-Fidelity, Wi-Fi for short) module 506, a Bluetooth module 507, a sensor 508, an input/output (input/output, I/O) device 509, and a positioning module 510. These components can communicate with each other through one or more communication buses or signal cables. The communication bus or the signal cable may be a CAN bus provided in this application. A person skilled in the art may understand that, the terminal device 500 may include more or fewer components than those shown in the diagram, or some components may be combined, or the components may be disposed in a different manner.

The following specifically describes the components in the terminal device 500 with reference to FIG. 5.

The application processor 501 is a control center of the terminal device 500, and is connected to the components of the terminal device 500 through various interfaces and buses. In some embodiments, the processor 501 may include one or more processing units.

The memory 503 stores a computer program, such as an operating system 511 and an application program 512 shown in FIG. 5. The application processor 501 is configured to execute the computer program in the memory 503, to implement a function defined by the computer program. For example, the application processor 501 executes the operating system 511 to implement various functions of the operating system on the terminal device 500. The memory 503 further stores other data in addition to the computer program, such as data generated during running of the operating system 511 and the application program 512. The memory 503 is a non-volatile storage medium, and generally includes an internal memory and an external memory. The internal memory includes but is not limited to a random access memory (random access memory, RAM), a read-only memory (read-only memory, ROM), a cache (cache), or the like. The external memory includes, but is not limited to, a flash memory (flash memory), a hard disk, a compact disc, a universal serial bus (universal serial bus, USB) flash drive, or the like. The computer program is usually stored in the external memory. Before executing the computer program, the processor loads the program from the external memory to the internal memory.

The memory 503 may be independent, and is connected to the application processor 501 through a bus. Alternatively, the memory 503 and the application processor 501 may be integrated into a chip subsystem.

The MCU 502 is a coprocessor configured to obtain and process data from the sensor 508. The MCU 502 has a weaker processing capability and lower power consumption than those of the application processor 501, but the MCU 502 has a feature of "always on (always on)", and can continuously collect and process sensor data when the application processor 501 is in a sleep mode, to ensure normal running of the sensor with relatively low power consumption. In an embodiment, the MCU 502 may be a sensor hub chip. The sensor 508 may include a light sensor and a motion sensor. Specifically, the light sensor may include an ambient light sensor and a proximity sensor. The ambient light sensor may adjust luminance of a display 5091 based on brightness of ambient light. The proximity sensor may power off a display when the terminal device 500 approaches an ear. As a type of motion sensor, an accelerometer sensor may detect values of accelerations in various directions (generally three axes), and may detect a value and a direction of gravity when the accelerometer sensor is still. The sensor 508 may further include another sensor such as a gyroscope, a barometer, a hygrometer, a thermometer, or an infrared sensor. Details are not described herein. The MCU 502 and the sensor 508 may be integrated into a same chip, or may be separate components and are connected through a bus.

The modem 504 and the radio frequency module 505 constitute a communications subsystem of the terminal device 500, and are configured to implement main functions of a wireless communications standard protocol. The modem 504 is configured to perform coding/decoding, signal modulation/demodulation, equalization, and the like. The radio frequency module 505 is configured to receive and send a radio signal, and the radio frequency module 505 includes but is not limited to an antenna, at least one amplifier, a coupler, a duplexer, and the like. The radio frequency module 505 cooperates with the modem 504 to implement a wireless communication function. The modem 504 may serve as an independent chip, or may be combined with another chip or circuit to form a system-level chip or an integrated circuit. These chips or integrated circuits may be applied to all terminal devices that implement the wireless communication function, including a mobile phone, a computer, a notebook computer, a tablet computer, a router, a wearable device, a vehicle, a home appliance, and the like.

The terminal device 500 may further perform wireless communication by using the Wi-Fi module 506, the Bluetooth module 507, or the like. The Wi-Fi module 506 is configured to provide the terminal device 500 network access that complies with a Wi-Fi related standard protocol. The terminal device 500 may access a Wi-Fi access point by using the Wi-Fi module 506, to access the Internet. In some other embodiments, the Wi-Fi module 506 may alternatively be used as a Wi-Fi wireless access point, and may provide Wi-Fi network access for another terminal device. The Bluetooth module 507 is configured to implement short-range communication between the terminal device 500 and another terminal device (for example, a mobile phone or a smartwatch). The Wi-Fi module 506 in this embodiment of this application may be an integrated circuit, a Wi-Fi chip, or the like, and the Bluetooth module 507 may be an integrated circuit, a Bluetooth chip, or the like.

The positioning module 510 is configured to determine a geographical location of the terminal device 500. It may be understood that the positioning module 510 may be specifically a receiver of a positioning system such as a global positioning system (global positioning system, GPS), a BeiDou navigation satellite system, or a Russian GLONASS. The Wi-Fi module 506, the Bluetooth module 507, and the positioning module 510 may be independent chips or integrated circuits, or may be integrated together. For example, in an embodiment, the Wi-Fi module 506, the Bluetooth module 507, and the positioning module 510 may be integrated into a same chip. In another embodiment, the Wi-Fi module 506, the Bluetooth module 507, the positioning module 510, and the MCU 502 may alternatively be integrated into a same chip.

The input/output device 509 includes but is not limited to the display 5091, a touchscreen 5092, an audio circuit 5093, and the like.

The touchscreen 5092 may collect a touch event of a user of the terminal device 500 on or near the touchscreen 5092 (for example, an operation performed by the user on or near the touchscreen 5092 by using any suitable object such as a finger or a stylus), and sends the collected touch event to another component (for example, the application processor 501). The operation performed by the user near the touchscreen 5092 may be referred to as a floating touch. Through the floating touch, the user may select, move, or drag a target (for example, an icon) without directly touching the touchscreen 5092. In addition, the touchscreen 5092 may be implemented by using a plurality of types such as a resistive type, a capacitive type, an infrared type, and a surface acoustic wave type.

The display (also referred to as a display) 5091 is configured to display information entered by the user or information displayed to the user. The display may be configured in a form such as a liquid crystal display or an organic light-emitting diode. The touchscreen 5092 may cover the display 5091. After detecting a touch event, the touchscreen 5092 transmits the touch event to the application processor 501 to determine a type of the touch event. Then, the application processor 501 may provide corresponding visual output on the display 5091 based on the type of the touch event. In FIG. 5, the touchscreen 5092 and the display 5091 serve as two independent components to implement input and output functions of the terminal device 500. However, in some embodiments, the touchscreen 5092 and the display 5091 may be integrated to implement the input and output functions of the terminal device 500. In addition, the touchscreen 5092 and the display 5091 may be disposed on a front side of the terminal device 500 in a full panel form, to implement a bezel-less structure.

The audio circuit 5093, a speaker 5094, and a microphone 5095 may provide an audio interface between the user and the terminal device 500. The audio circuit 5093 may transmit an electrical signal into which received audio data is converted to the speaker 5094, and the speaker 5094 converts the electrical signal into a sound signal for output. In addition, the microphone 5095 converts a collected sound signal into an electrical signal, the audio circuit 5093 receives the electrical signal, converts the electrical signal into audio data, and then sends the audio data to, for example, another terminal device by using the modem 504 and the radio frequency module 505, or outputs the audio data to the memory 503 for further processing.

In addition, the terminal device 500 may further have a fingerprint recognition function. For example, a fingerprint collection component may be configured on a back side of the terminal device 500 (for example, a lower part of a rear-facing camera), or a fingerprint collection component may be configured on the front side of the terminal device 500 (for example, a lower part of the touchscreen 5092). For another example, a fingerprint collection component may be configured in the touchscreen 5092 to implement the fingerprint recognition function. To be specific, the fingerprint collection component may be integrated with the touchscreen 5092 to implement the fingerprint recognition function of the terminal device 500. In this case, the fingerprint collection component is configured in the touchscreen 5092, and may be a part of the touchscreen 5092, or the fingerprint collection component may be configured in the touchscreen 5092 in another manner. A main part of the fingerprint collection component in this embodiment of this application is a fingerprint sensor, and the fingerprint sensor may use any type of sensing technology, including but not limited to an optical, a capacitive, a piezoelectric, or an ultrasonic wave sensing technology.

Further, the operating system 511 carried in the terminal device 500 may be iOS®, Android®, Microsoft®, or another operating system. This is not limited in this embodiment of this application.

The terminal device 500 carrying the Android® operating system is used as an example. The terminal device 500 may be logically divided into a hardware layer, the operating system 511, and an application layer. The hardware layer includes hardware resources such as the foregoing application processor 501, MCU 502, memory 503, modem 504, Wi-Fi module 506, sensor 508, and positioning module 510. The application layer includes one or more application programs, for example, the application program 512. The application program 512 may be an application program of any type, for example, a social application, an e-commerce application, or a browser. The operating system 511 serves as software middleware between the hardware layer and the application layer, and is a computer program for managing and controlling hardware and software resources.

In an embodiment, the operating system 511 includes a kernel, a hardware abstraction layer (hardware abstraction layer, HAL), a library and runtime (libraries and runtime), and a framework (framework). The kernel is configured to provide an underlying system component and service, for example, power management, memory management, thread management, and a hardware driver. The hardware driver includes a Wi-Fi driver, a sensor driver, a positioning module driver, and the like. The hardware abstraction layer is encapsulation of a kernel driver program, provides an interface for the framework, and shields an underlying implementation detail. The hardware abstraction layer is run in user space, and the kernel driver program is run in kernel space.

The library and runtime is also referred to as a runtime library, and provides a library file and an execution environment that are required by an executable program in a runtime. In an embodiment, the library and runtime include Android runtime (android runtime, ART), a library, and a scenario package runtime. The ART is a virtual machine or a virtual machine instance that can convert bytecode of an application program into machine code. The library is a program library that provides support for the executable program in the runtime, and includes a browser engine (such as a webkit), a script execution engine (such as a JavaScript engine), a graphics processing engine, and the like. The scenario package runtime is a running environment of a scenario package, and mainly includes a page execution environment (page context) and a script execution environment (script context). The page execution environment invokes a corresponding library to parse page code in an html, css, or another format, and the script execution environment invokes a corresponding function library to parse and execute code or an executable file implemented by a script language such as JavaScript.

The framework is configured to provide various basic common components and services such as window management and location management for the application program in the application layer. In an embodiment, the framework includes a geofence service, a policy service, a notification manager, and the like.

All functions of the components in the operating system 511 described above may be implemented by the application processor 501 by executing the program stored in the memory 503.

A person skilled in the art may understand that the terminal device 500 may include fewer or more components than those shown in FIG. 5, and the terminal device shown in FIG. 5 includes only components more related to a plurality of implementations disclosed in this application.

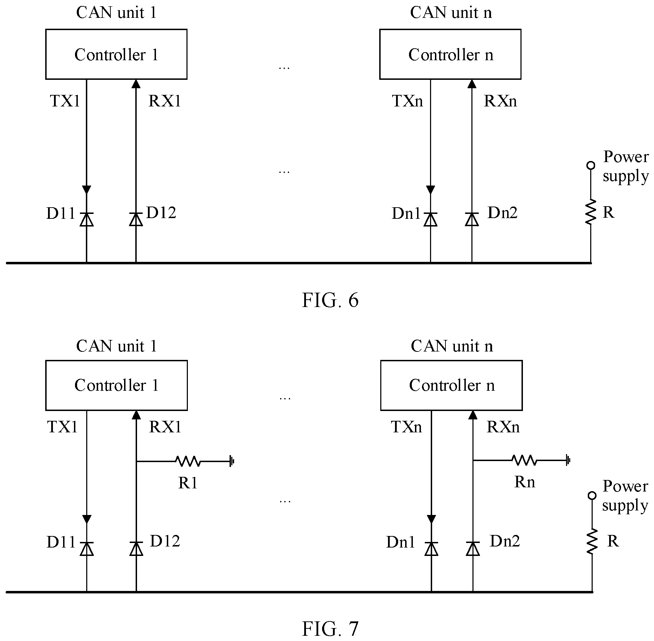

FIG. 6 is a schematic diagram of Embodiment 1 of a structure of a CAN bus circuit according to this application. As shown in FIG. 6, the CAN bus circuit in this application includes at least one (1 to n) CAN unit and one bus. Each CAN unit includes one controller, and each CAN unit has a same structure.

A CAN unit 1 includes a controller 1. The controller 1 includes an output port (TX1) and an input port (RX1). TX1 is connected to a bus by using a first circuit. A first diode D11 is disposed on the first circuit. A direction of the first diode D11 is from TX1 to the bus. RX1 is connected to the bus by using a second circuit. A second diode D12 is disposed on the second circuit. A direction of the second diode D12 is from the bus to RX1. The rest can be deduced by analogy. A CAN unit n includes a controller n. The controller n includes an output port (TXn) and an input port (RXn). TXn is connected to the bus by using a first circuit. A first diode Dn1 is disposed on the first circuit. A direction of the first diode Dn1 is from TXn to the bus. RXn is connected to the bus by using a second circuit. A second diode Dn2 is disposed on the second circuit. A direction of the second diode Dn2 is from the bus to RXn. It should be noted that the first diodes D11, Dn1, and the like, and the second diodes D12, Dn2, and the like may be replaced with other devices, for example, triodes or transistors. In other words, any device or circuit that has a diode function may be used to perform an equivalent function herein. This is not specifically limited in this application.

One end of a resistor R serving as a current-limiting resistor on the bus is connected to a power supply, and the other end of the resistor R is connected to the bus. It should be noted that the resistor R needs to be disposed on a bus between a CAN unit closest to the power supply and the power supply. Take FIG. 6 as an example. The resistor R is located on a part of the bus between the CAN unit n and the power supply.

Four thresholds are preset: a low level threshold VILmax of an input signal, a high level threshold VIHmin of the input signal, a low level threshold VOLmax of an output signal, and a high level threshold VOHmin of the output signal, where VILmax≥VOLmax, and VIHmin≤VOHmin.

When a voltage that is output through the output port Vo≤VOLmax, it is determined that the output port outputs a low level.

Alternatively, when a voltage that is output through the output port Vo≥VOHmin, it is determined that the output port outputs a high level.

When a voltage that is input through the input port Vi≤VILmax, it is determined that the input port inputs a low level. Alternatively, when a voltage that is input through the input port Vi≥VIHmin, it is determined that the input port inputs a high level.

The following uses the controller 1 as an example to describe a principle that the CAN bus circuit in this application meets CAN bus communication requirements.

1. When a signal sent by the controller 1 has a high level, TX1 outputs a high level, that is, a voltage that is output through TX1 Vo≥VOHmin. Because both ends of the first diode D 11 have high levels (the bus is loaded with the power supply, and therefore, the bus has a high level), the first diode D11 is not turned on. In this case, the second diode D12 is turned on, and that RX1 inputs a high level needs to meet the following:

$$Vi=Vbus-V12 \geq VIHmin,$$

where
Vi is an input voltage of RX1, V12 is a forward voltage drop of the second diode D12, Vbus=Vcc-Vr, where Vcc is an input voltage provided by the power supply for the bus, and Vr is a voltage drop of the resistor R, so that V12≤Vcc-VIHmin-Vr is obtained.

2. When a signal sent by the controller 1 has a low level, TX1 outputs a low level, that is, Vo≤VOLmax. Because the bus has a high level, the first diode D11 is turned on. After the first diode D11 is turned on, a voltage on the bus Vbus=Vo+V11, where Vbus has a low level, Vo is a voltage that is output through TX1, and V11 is a forward voltage drop of the first diode D11. In this case, the second diode D12 needs to be turned on to implement CAN bus communication. To ensure that the second diode D12 is turned on, it needs to be considered that a safety margin ΔVd is added to a forward voltage V12 of the second diode D12. Theoretically, a turn-on voltage of the second diode D12 V12'=V12+ΔVd, where V12' is a theoretical turn-on voltage of the second diode D12, and ΔVd is a safety margin used to ensure that the second diode D12 is turned on when the bus has a low level. In this case, that RX1 inputs a low level needs to meet the following:

$$Vi=Vbus-V12' \leq VILmax,$$

where
V11-V12'≤VILmax-Vo may be obtained through substitution into the formula of Vbus, and in an extreme case, V11-V12'≤VILmax-VOLmax. V11-V12≤VILmax-Vo+ΔVd may be obtained through substitution into the formula of V12', and in an extreme case, V11-V12≤VILmax-VOLmax+ΔVd. V12≤Vcc-VIHmin-Vr-ΔVd may be obtained with reference to the inequality V12≤Vcc-VIHmin-Vr in the case 1 and the formula of V12'.

It is assumed that Vcc=3.3V, VOLmax=0.7V, VOHmin=2.3V, VILmax=0.8V and VIHmin=2V, and the safety margin ΔVd may be evaluated based on experience, for example, ΔVd=0.3V Through substitution into the formula, it is deduced that:

$$V12 \leq 1 - Vr, \text{ and } V11 - V12 \leq 0.4V.$$

Generally, in a chip, an internal impedance is relatively large, and a current is relatively small. Therefore, a division voltage Vr of the resistor R may be ignored, and it is obtained that V12≤1. For the first diode D11 and the second diode D12, it is required that the forward voltage drop of the second diode D12 is less than 1V, and a difference between forward voltage drops of the first diode D11 and the second diode D 12 is less than or equal to 0.4 V and may be a negative value. Currently, a universal diode can meet the requirement, and there is no restriction on selection. In this embodiment, diodes are separately disposed on a circuit of an output port and a circuit of an input port, so that a forward voltage drop requirement for the diode can be reduced, to implement engineering application. However, in this embodiment, a safety margin is introduced based on non-consistency of turn-on voltages of diodes in actual application, and the safety margin is usually evaluated based on experience. Therefore, there is still some uncertainty in engineering implementation.

In a possible implementation, based on the structure of the CAN bus circuit shown in FIG. 6, FIG. 7 is a schematic diagram of Embodiment 2 of a structure of a CAN bus circuit according to this application. As shown in FIG. 7, in the CAN bus circuit in this application, a weak pull-down resistor (R1 to Rn) is connected to a second circuit between an input port (RX1 to RXn) of each controller and the bus. One end of the resistor R1 is grounded, the other end of the resistor R1 is connected to the second circuit between RX1 and the bus, and a connection point between the resistor R1 and the second circuit is located between RX1 and a second diode D12. By analogy, one end of the resistor Rn is grounded, the other end of the resistor Rn is connected to the second circuit between RXn and the bus, and a connection point between the resistor Rn and the second circuit is located between RXn and a second diode Dn2. A resistance of the weak pull-down resistor is much greater than that of a resistor R.

The following uses a controller 1 as an example to describe a principle that the CAN bus circuit in this application meets CAN bus communication requirements.

1. When a signal sent by the controller 1 has a high level, TX1 outputs a high level, that is, a voltage that is output through TX1 Vo≥VOHmin.

Because both ends of a first diode D11 have high levels (the bus is loaded with a power supply, and therefore, the bus has a high level), the first diode D11 is not turned on. A voltage on the bus Vbus=Vcc-Vr, where Vcc is an input voltage provided by the power supply for the bus, and Vr is a voltage drop of the resistor R. In this case, the second diode D12 is turned on, and that RX1 inputs a high level needs to meet the following:

$$Vi = Vbus - V12 \geq VIHmin,$$

where
Vi is an input voltage of RX1, and V12 is a forward voltage drop of the second diode D12. Because R1>>R, the division voltage Vr of the resistor R may be ignored, and V12≤Vcc-VIHmin may be obtained through substitution into the formula of Vbus.

2. When a signal sent by the controller 1 has a low level, TX1 outputs a low level, that is, Vo≤VOLmax. Because the bus has a high level, the first diode D11 is turned on. After the first diode D11 is turned on, a voltage on the bus Vbus=Vo+V11, where Vbus has a low level, Vo is a voltage that is output through TX1, and V11 is a forward voltage drop of the first diode D11.

If the second diode D12 is not turned on, an RX1 end receives a low level due to a weak pull-down function of R1. This is because weak pull-down of R1 means that a circuit branch led out of the second circuit connected to RX1 is directly connected to the resistor and grounded. A ground level is 0, indicating that RX1 is grounded. Therefore, RX1 receives the low-level signal

If the second diode D12 is turned on, and that RX1 inputs a low level needs to meet the following:

$$Vi = Vbus - V12 \leq VILmax,$$

where
V11-V12≤VILmax-V0 may be obtained through substitution into the formula of Vbus, and in an extreme case, V11-V12≤VILmax-VOLmax.

It is assumed that Vcc=3.3V, VOLmax=0.7V, VOHmin=2.3V, VILmax=0.8V and VIHmin=2V Through substitution into the formula, it is deduced that:

$$V12 \leq 1.3V, V11 - V12 \leq 0.1V.$$

For the first diode D11 and the second diode D12, it is required that the forward voltage drop of the second diode D12 is less than 1.3 V, and a difference between forward voltage drops of the first diode D11 and the second diode D12 is less than or equal to 0.1V and may be a negative value. Currently, a universal diode can meet the requirement, and there is no restriction on selection. In addition, no safety margin is involved in this embodiment, so that compared with Embodiment 1, this embodiment avoids uncertainty in engineering.

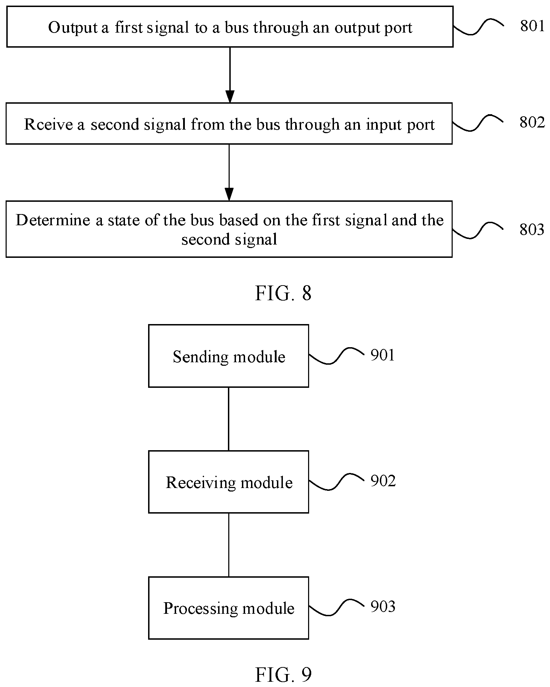

FIG. 8 is a flowchart of an embodiment of a CAN bus communications method according to this application. The method may be performed by CAN units (including a CAN unit 1 to a CAN unit n) in the CAN bus circuit shown in FIG. 6 or FIG. 7. The CAN bus communications method includes the following steps:
Step 801: Output a first signal to a bus through an output port.

The CAN unit may output the first signal to the bus through output ports (TX1 to TXn) shown in FIG. 6 or FIG. 7.

Step: 802: Receive a second signal from the bus through an input port.

The CAN unit may receive the second signal from the bus through input ports (RX1 to RXn) shown in FIG. 6 or FIG. 7.

Step 803: Determine a state of the bus based on the first signal and the second signal

A standard for the CAN unit to determine the state of the CAN bus may be: When the first signal has a high level, if the second signal has a high level, the bus is normal; or if the second signal has a low level, the bus is abnormal. When the first signal has a low level, if the second signal has a high level, the bus is abnormal; or if the second signal has a low level, the bus is normal.

A CAN bus communication principle is as follows:

(1) When the first signal has a high level, a first diode is not turned on and a second diode is turned on, and if a forward voltage drop of the second diode meets a first condition, the input port inputs a high level; and the first condition is:

$$V2 \leq Vcc - VIHmin - Vr - \Delta Vd,$$

where
V2 is the forward voltage drop of the second diode, Vcc is an input voltage on the bus, VIHmin is a high level threshold of the input port, Vr is a voltage drop of a first resistor, and $\Delta Vd$ is a safety margin used to ensure that the second diode is turned on when the bus has a low level.

Alternatively, when the first signal has a low level, both the first diode and the second diode are turned on, and if a forward voltage drop of the first diode and the forward voltage drop of the second diode meet a second condition, the input port inputs a low level; and the second condition is:

$$V1 - V2 \leq VILmax - Vo + \Delta Vd,$$

where
V1 is the forward voltage drop of the first diode, VILmax is a low level threshold of the input port, and Vo is a voltage that is output through the output port.

(2) When the first signal has a high level, the first diode is not turned on and the second diode is turned on, and if the forward voltage drop of the second diode meets a third condition, the second signal has a high level; and the third condition is:

$$V2 \leq Vcc - VIHmin,$$

where
V2 is the forward voltage drop of the second diode, Vcc is the input voltage on the bus, and VIHmin is the high level threshold of the input port.

Alternatively, when the first signal has a low level, the first diode is turned on, and if the second diode is not turned on, the second signal has a low level.

Alternatively, when the first signal has a low level, the first diode is turned on, and if the second diode is turned on, the forward voltage drop of the first diode and the forward voltage drop of the second diode meet a fourth condition and the second signal has a low level; and the fourth condition is:

$$V1 - V2 \leq VILmax - Vo,$$

where
V1 is the forward voltage drop of the first diode, VILmax is a low level threshold of the input port, and Vo is a voltage that is output through the output port.

Criteria for determining the high and low levels may include:

When a fifth condition is met, the first signal has a low level; and the fifth condition is: Vo≤VOLmax, where VOLmax is a low level threshold of the first signal, and Vo is a level of the first signal

Alternatively, when a sixth condition is met, the first signal has a high level; and the sixth condition is: Vo≥VOHmin, where VOHmin is a high level threshold of the first signal.

Alternatively, when a seventh condition is met, the second signal has a low level; and the seventh condition is: Vi≤VILmax, where VILmax is a low level threshold of the second signal, and Vi is a level of the second signal.

Alternatively, when an eighth condition is met, the second signal has a high level; and the eighth condition is: Vi≥VIHmin, where VIHmin is a high level threshold of the second signal

In this embodiment, diodes are separately disposed on a circuit of an output port and a circuit of an input port, so that a forward voltage drop requirement for the diode can be reduced, to implement engineering application.

FIG. 9 is a schematic diagram of a structure of an embodiment of a CAN bus communications apparatus according to this application. As shown in FIG. 9, the CAN bus communications apparatus includes: a sending module 901, a receiving module 902, and a processing module 903. The sending module 901 is configured to output a first signal to a bus through an output port. The receiving module 902 is configured to receive a second signal from the bus through an input port. The processing module 903 is configured to determine a state of the bus based on the first signal and the second signal.

In a possible implementation, when the first signal has a high level, the processing module 903 is specifically configured to: if the second signal has a high level, determine that the bus is normal; or if the second signal has a low level, determine that the bus is abnormal.

In a possible implementation, when the first signal has a low level, the processing module 903 is specifically configured to: if the second signal has a high level, determine that the bus is abnormal; or if the second signal has a low level, determine that the bus is normal.

In a possible implementation, when the first signal has a high level, a first diode is not turned on and a second diode is turned on, and if a forward voltage drop of the second diode meets a first condition, the input port inputs a high level; and the first condition is:

$$V2 \leq Vcc-VIHmin-Vr-\Delta Vd,$$

where
V2 is the forward voltage drop of the second diode, Vcc is an input voltage on the bus, VIHmin is a high level threshold of the input port, Vr is a voltage drop of a first resistor, and $\Delta Vd$ is a safety margin used to ensure that the second diode is turned on when the bus has a low level.

Alternatively, when the first signal has a low level, both the first diode and the second diode are turned on, and if a forward voltage drop of the first diode and the forward voltage drop of the second diode meet a second condition, the input port inputs a low level; and the second condition is:

$$V1-V2 \leq VILmax-Vo+\Delta Vd,$$

where
V1 is the forward voltage drop of the first diode, VILmax is a low level threshold of the input port, and Vo is a voltage that is output through the output port.

In a possible implementation, when the first signal has a high level, the first diode is not turned on and the second diode is turned on, and if the forward voltage drop of the second diode meets a third condition, the second signal has a high level; and the third condition is:

$$V2 \leq Vcc-VIHmin,$$

where
V2 is the forward voltage drop of the second diode, Vcc is the input voltage on the bus, and VIHmin is the high level threshold of the input port.

Alternatively, when the first signal has a low level, the first diode is turned on, and if the second diode is not turned on, the second signal has a low level.

Alternatively, when the first signal has a low level, the first diode is turned on, and if the second diode is turned on, the forward voltage drop of the first diode and the forward voltage drop of the second diode meet a fourth condition and the second signal has a low level; and the fourth condition is:

$$V1-V2 \leq VILmax-Vo,$$

where
V1 is the forward voltage drop of the first diode, VILmax is a low level threshold of the input port, and Vo is a voltage that is output through the output port.

In a possible implementation, when a fifth condition is met, the first signal has a low level; and the fifth condition is: $Vo \leq VOLmax$, where VOLmax is a low level threshold of the first signal, and Vo is a level of the first signal

Alternatively, when a sixth condition is met, the first signal has a high level; and the sixth condition is: $Vo \geq VOHmin$, where VOHmin is a high level threshold of the first signal.

Alternatively, when a seventh condition is met, the second signal has a low level; and the seventh condition is: $Vi \leq VILmax$, where VILmax is a low level threshold of the second signal, and Vi is a level of the second signal

Alternatively, when an eighth condition is met, the second signal has a high level; and the eighth condition is: $Vi \geq VIHmin$, where VIHmin is a high level threshold of the second signal

The apparatus in this embodiment may be a network device or a terminal device, or may be a chip in a network device or a terminal device, and may include a plurality of function modules, configured to perform the foregoing method embodiment. An implementation principle and a technical effect of the technical solution in the method embodiment shown in FIG. 8 are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the method disclosed in embodiments of this application may be directly presented as being performed and completed by a hardware encoding processor, or performed and completed by a combination of hardware and a software module in an encoding processor. The software module may be located in a mature storage medium in the field, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the system and method described in this specification includes but is not limited to these and any memory of another proper type.

A person of ordinary skill in the art may be aware that, in combination with examples described in embodiments disclosed in this specification, units and algorithm steps may be implemented by electronic hardware or a combination of computer software and electronic hardware. Whether the functions are implemented by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in another manner. For example, the described apparatus embodiments is only an example. For example, division of the units is only logical function division, and may be other division during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A CAN bus circuit, comprising: at least one CAN unit and one bus, wherein a first CAN unit comprises an input port and an output port, and the first CAN unit is any one of the at least one CAN unit;

   the output port is connected to the bus by using a first circuit, and the input port is connected to the bus by using a second circuit; and
   a first diode is disposed on the first circuit; and a second diode is disposed on the second circuit.

2. The CAN bus circuit according to claim 1, further comprising: a first resistor, wherein one end of the first resistor is connected to a power supply, and the other end of the first resistor is connected to the bus.

3. The CAN bus circuit according to claim 1 or 2, further comprising: a second resistor, wherein one end of the second resistor is grounded, the other end of the second resistor is connected to the second circuit, and a connection point between the second resistor and the second circuit is located between the input port and the second diode.

4. The CAN bus circuit according to claim 2, wherein when the output port outputs a high level, the first diode is not turned on and the second diode is turned on, and if a forward voltage drop of the second diode meets a first condition, the input port inputs a high level; and the first condition is:

$$V2 \leq Vcc - VIHmin - Vr - \Delta Vd,$$

   wherein

   V2 is the forward voltage drop of the second diode, Vcc is an input voltage on the bus, VIHmin is a high level threshold of the input port, Vr is a voltage drop of the first resistor, and $\Delta Vd$ is a safety margin used to ensure that the second diode is turned on when the bus has a low level; or
   when the output port outputs a low level, both the first diode and the second diode are turned on, and if a forward voltage drop of the first diode and the forward voltage drop of the second diode meet a second condition, the input port inputs a low level; and the second condition is:

$$V1 - V2 \leq VILmax - Vo + \Delta Vd,$$

   wherein
   V1 is the forward voltage drop of the first diode, VILmax is a low level threshold of the input port, and Vo is a voltage that is output through the output port.

5. The CAN bus circuit according to claim 3, wherein when the output port outputs a high level, the first diode is not turned on and the second diode is turned on, and if a forward voltage drop of the second diode meets a third condition, the input port inputs a high level; and the third condition is:

$$V2 \leq Vcc - VIHmin,$$

   wherein

   V2 is the forward voltage drop of the second diode, Vcc is an input voltage on the bus, and VIHmin is a high level threshold of the input port; or
   when the output port outputs a low level, the first diode is turned on, and if the second diode is not turned on, the input port inputs a low level; or
   when the output port outputs a low level, the first diode is turned on, and if the second diode is turned on, a forward voltage drop of the first diode and the forward voltage drop of the second diode meet a fourth condition and the input port inputs a low level; and the fourth condition is:

$$V1 - V2 \leq VILmax - Vo,$$

   wherein
   V1 is the forward voltage drop of the first diode, VILmax is a low level threshold of the input port, and Vo is a voltage that is output through the output port.

6. The CAN bus circuit according to claim 4 or 5, wherein the input voltage Vcc on the bus is 5V, 3.3V or 1.8V

7. The CAN bus circuit according to claim 4 or 5, wherein when a fifth condition is met, the output port outputs a low level; and the fifth condition is: Vo≤VOLmax, wherein VOLmax is a low level threshold of the output port, and Vo is the voltage that is output through the output port;

   when a sixth condition is met, the output port outputs a high level; and the sixth condition is: Vo≥VOHmin, wherein VOHmin is a high level threshold of the output port;
   when a seventh condition is met, the input port inputs a low level; and the seventh condition is: Vi≤VILmax, wherein VILmax is the low level threshold of the input port, and Vi is a voltage that is input through the input port; or

when an eighth condition is met, the input port inputs a high level; and the eighth condition is: $Vi \geq VIHmin$, wherein VIHmin is the high level threshold of the input port.

8. A CAN bus communications method, wherein the method is applied to the CAN bus circuit according to any one of claims 1 to 7, and the method comprises:

outputting a first signal to a bus through an output port;
receiving a second signal from the bus through an input port; and
determining a state of the bus based on the first signal and the second signal.

9. The method according to claim 8, wherein when the first signal has a high level, the determining a state of the bus based on the first signal and the second signal comprises:

if the second signal has a high level, determining that the bus is normal; or
if the second signal has a low level, determining that the bus is abnormal.

10. The method according to claim 8, wherein when the first signal has a low level, the determining a state of the bus based on the first signal and the second signal comprises:

if the second signal has a high level, determining that the bus is abnormal; or
if the second signal has a low level, determining that the bus is normal.

11. The method according to any one of claims 8 to 10, wherein when the first signal has a high level, a first diode is not turned on and a second diode is turned on, and if a forward voltage drop of the second diode meets a first condition, the input port inputs a high level; and the first condition is:

$$V2 \leq Vcc - VIHmin - Vr - \Delta Vd,$$

wherein

V2 is the forward voltage drop of the second diode, Vcc is an input voltage on the bus, VIHmin is a high level threshold of the input port, Vr is a voltage drop of a first resistor, and $\Delta Vd$ is a safety margin used to ensure that the second diode is turned on when the bus has a low level; or
when the first signal has a low level, both the first diode and the second diode are turned on, and if a forward voltage drop of the first diode and the forward voltage drop of the second diode meet a second condition, the input port inputs a low level; and the second condition is:

$$V1 - V2 \leq VILmax - Vo + \Delta Vd,$$

wherein
V1 is the forward voltage drop of the first diode, VILmax is a low level threshold of the input port, and Vo is a voltage that is output through the output port.

12. The method according to any one of claims 8 to 11, wherein when the first signal has a high level, the first diode is not turned on and the second diode is turned on, and if the forward voltage drop of the second diode meets a third condition, the second signal has a high level; and the third condition is:

$$V2 \leq Vcc - VIHmin,$$

wherein

V2 is the forward voltage drop of the second diode, Vcc is the input voltage on the bus, and VIHmin is the high level threshold of the input port; or
when the first signal has a low level, the first diode is turned on, and if the second diode is not turned on, the second signal has a low level; or
when the first signal has a low level, the first diode is turned on, and if the second diode is turned on, the forward voltage drop of the first diode and the forward voltage drop of the second diode meet a fourth condition and the second signal has a low level; and the fourth condition is:

$$V1 - V2 \leq VILmax - Vo,$$

wherein
V1 is the forward voltage drop of the first diode, VILmax is the low level threshold of the input port, and Vo is the voltage that is output through the output port.

13. The method according to claim 11 or 12, wherein when a fifth condition is met, the first signal has a low level; and the fifth condition is: $Vo \leq VOLmax$, wherein VOLmax is a low level threshold of the first signal, and Vo is a level of the first signal;

when a sixth condition is met, the first signal has a high level; and the sixth condition is: $Vo \geq VOHmin$, wherein VOHmin is a high level threshold of the first signal;

when a seventh condition is met, the second signal has a low level; and the seventh condition is: Vi≤VILmax, wherein VILmax is a low level threshold of the second signal, and Vi is a level of the second signal; or

when an eighth condition is met, the second signal has a high level; and the eighth condition is: Vi≥VIHmin, wherein VIHmin is a high level threshold of the second signal.

14. A CAN bus communications apparatus, wherein the apparatus comprises:

a sending module, configured to output a first signal to a bus through an output port;
a receiving module, configured to receive a second signal from the bus through an input port; and
a processing module, configured to determine a state of the bus based on the first signal and the second signal

15. The apparatus according to claim 14, wherein when the first signal has a high level, the processing module is specifically configured to: if the second signal has a high level, determine that the bus is normal; or if the second signal has a low level, determine that the bus is abnormal.

16. The apparatus according to claim 14, wherein when the first signal has a low level, the processing module is specifically configured to: if the second signal has a high level, determine that the bus is abnormal; or if the second signal has a low level, determine that the bus is normal

17. The apparatus according to claim 14 to 16, wherein when the first signal has a high level, a first diode is not turned on and a second diode is turned on, and if a forward voltage drop of the second diode meets a first condition, the input port inputs a high level; and the first condition is:

$$V2 \leq Vcc - VIHmin - Vr - \Delta Vd,$$

wherein

V2 is the forward voltage drop of the second diode, Vcc is an input voltage on the bus, VIHmin is a high level threshold of the input port, Vr is a voltage drop of a first resistor, and $\Delta Vd$ is a safety margin used to ensure that the second diode is turned on when the bus has a low level; or
when the first signal has a low level, both the first diode and the second diode are turned on, and if a forward voltage drop of the first diode and the forward voltage drop of the second diode meet a second condition, the input port inputs a low level; and the second condition is:

$$V1 - V2 \leq VILmax - Vo + \Delta Vd,$$

wherein
V1 is the forward voltage drop of the first diode, VILmax is a low level threshold of the input port, and Vo is a voltage that is output through the output port.

18. The apparatus according to any one of claims 14 to 17, wherein when the first signal has a high level, the first diode is not turned on and the second diode is turned on, and if the forward voltage drop of the second diode meets a third condition, the second signal has a high level; and the third condition is:

$$V2 \leq Vcc - VIHmin,$$

wherein

V2 is the forward voltage drop of the second diode, Vcc is the input voltage on the bus, and VIHmin is the high level threshold of the input port; or
when the first signal has a low level, the first diode is turned on, and if the second diode is not turned on, the second signal has a low level; or
when the first signal has a low level, the first diode is turned on, and if the second diode is turned on, the forward voltage drop of the first diode and the forward voltage drop of the second diode meet a fourth condition and the second signal has a low level; and the fourth condition is:

$$V1 - V2 \leq VILmax - Vo,$$

wherein
V1 is the forward voltage drop of the first diode, VILmax is the low level threshold of the input port, and Vo is the voltage that is output through the output port.

19. The apparatus according to claim 17 or 18, wherein when a fifth condition is met, the first signal has a low level; and the fifth condition is: Vo≤VOLmax, wherein VOLmax is a low level threshold of the first signal, and Vo is a level of the first signal;

when a sixth condition is met, the first signal has a high level; and the sixth condition is: Vo≥VOHmin, wherein VOHmin is a high level threshold of the first signal;

when a seventh condition is met, the second signal has a low level; and the seventh condition is: $Vi \leq VILmax$, wherein VILmax is a low level threshold of the second signal, and Vi is a level of the second signal; or

when an eighth condition is met, the second signal has a high level; and the eighth condition is: $Vi \geq VIHmin$, wherein VIHmin is a high level threshold of the second signal.

20. A device, wherein components in the device communicate with each other by using the CAN bus circuit according to any one of claims 1 to 7.

CAN unit 1

Controller

...

Transceiver

...

CAN unit n

Controller

Transceiver

CANH

RT

CANL

RT

FIG. 1

Input

3.3V

VIHmin

VILmax

0V

Output

3.3V

VOHmin

VIHmin≤VOHmin

VILmax≥VOLmax

VOLmax

0V

FIG. 2

FIG. 3

FIG. 4

FIG. 5

EP 4 105 784 A1

CAN unit 1    CAN unit n

Controller 1    ...    Controller n

TX1    RX1    TXn    RXn

Power
supply

D11    D12    Dn1    Dn2    R

FIG. 6

CAN unit 1    CAN unit n

Controller 1    ...    Controller n

TX1    RX1    TXn    RXn

R1    Rn

Power
supply

D11    D12    Dn1    Dn2    R

FIG. 7

Output a first signal to a bus through an output port ⎯⎯⎯ 801

Rceive a second signal from the bus through an input port ⎯⎯⎯ 802

Determine a state of the bus based on the first signal and the second signal ⎯⎯⎯ 803

FIG. 8

Sending module ⎯⎯⎯ 901

Receiving module ⎯⎯⎯ 902

Processing module ⎯⎯⎯ 903

FIG. 9

## INTERNATIONAL SEARCH REPORT

| | International application No. |
| --- | --- |
| | **PCT/CN2020/077651** |

**A. CLASSIFICATION OF SUBJECT MATTER**

G06F 13/38(2006.01)i; H04L 12/40(2006.01)i

According to International Patent Classification (IPC) or to both national classification and IPC

**B. FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IETF; IEEE; ETSI: 控制器局域网, 总线, 压降, 二极管, 电压, 高电平, 低电平, 距离, 干扰, 导通, 单线, 收发器, 反接, 阈值, 正向, 下拉电阻, 限流, 输出端口, 输入端口, 阻抗, CAN bus, drop, RX, TX, diode, voltage, Threshold

**C. DOCUMENTS CONSIDERED TO BE RELEVANT**

| Category* | Citation of document, with indication, where appropriate, of the relevant passages | Relevant to claim No. |
| --- | --- | --- |
| X | CN 101523835 A (WABCO GMBH) 02 September 2009 (2009-09-02) description, page 7 line 4 - page 10 line 10, description, figures 3-4 | 1-2, 8-10, 14-16, 20 |
| X | CN 105122229 A (ATIEVA INC.) 02 December 2015 (2015-12-02) description, paragraphs [0024]-[0034] | 14-16 |
| X | CN 105191221 A (ATIEVA INC.) 23 December 2015 (2015-12-23) claims 1-7 | 14-16 |
| A | CN 204389963 U (HIRAIN TECHNOLOGIES CO., LTD.) 10 June 2015 (2015-06-10) entire document | 1-20 |
| A | CN 105763406 A (GIGADEVICE SEMICONDUCTOR INC.) 13 July 2016 (2016-07-13) entire document | 1-20 |
| A | US 2018189129 A1 (ESA) 05 July 2018 (2018-07-05) entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2020** | **09 December 2020** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/077651**

| Patent document cited in search report | | | Publication date (day/month/year) | Patent family member(s) | | | Publication date (day/month/year) |
|---|---|---|---|---|---|---|---|
| CN | 101523835 | A | 02 September 2009 | US | 2010033163 | A1 | 11 February 2010 |
| | | | | WO | 2008043404 | A1 | 17 April 2008 |
| | | | | DE | 102006048073 | A1 | 17 April 2008 |
| | | | | EP | 2080334 | A1 | 22 July 2009 |
| | | | | US | 8294474 | B2 | 23 October 2012 |
| | | | | CN | 101523835 | B | 21 October 2015 |
| | | | | IN | 279174 | B | 13 January 2017 |
| | | | | IN | 200901279 | P2 | 29 May 2009 |
| CN | 105122229 | A | 02 December 2015 | US | 9946675 | B2 | 17 April 2018 |
| | | | | DE | 112014001347 | T5 | 19 November 2015 |
| | | | | WO | 2014165224 | A2 | 09 October 2014 |
| | | | | JP | 2016517581 | A | 16 June 2016 |
| | | | | WO | 2014165224 | A3 | 27 November 2014 |
| | | | | CN | 105122229 | B | 27 April 2018 |
| | | | | US | 2014281079 | A1 | 18 September 2014 |
| CN | 105191221 | A | 23 December 2015 | DE | 112014000984 | T5 | 03 December 2015 |
| | | | | US | 2014281077 | A1 | 18 September 2014 |
| | | | | CN | 109347713 | A | 15 February 2019 |
| | | | | JP | 2016519461 | A | 30 June 2016 |
| | | | | CN | 105191221 | B | 26 October 2018 |
| | | | | DE | 112014000984 | B4 | 02 February 2017 |
| | | | | US | 9229889 | B2 | 05 January 2016 |
| | | | | WO | 2014159979 | A1 | 02 October 2014 |
| CN | 204389963 | U | 10 June 2015 | None | | | |
| CN | 105763406 | A | 13 July 2016 | CN | 105763406 | B | 17 September 2019 |
| US | 2018189129 | A1 | 05 July 2018 | US | 10565042 | B2 | 18 February 2020 |
| | | | | WO | 2016202396 | A1 | 22 December 2016 |
| | | | | EP | 3311539 | A1 | 25 April 2018 |
| | | | | WO | 2016202396 | A8 | 09 March 2017 |

Form PCT/ISA/210 (patent family annex) (January 2015)